# EUROPÄISCHE PATENTANMELDUNG

(11) **EP 0 549 945 A2**
(43) Veröffentlichungstag der Anmeldung: **07.07.1993**
(21) Anmeldenummer: 92121259.3
(22) Anmeldetag: 14.12.1992
(51) Int. Cl.: G01F 1/20, G01F 1/32

(54) **Durchflussmesser**

(30) Priorität: 30.12.1991 DE 4143202
(71) Anmelder: ROTA YOKOGAWA GmbH & Co. KG, D-79664 Wehr (DE)
(72) Erfinder: Ricken, Hans-Martin, Dr., W-7880 Bad Säckingen (DE)
(74) Vertreter: Heim, Hans-Karl, Dipl.-Ing.

(57) **Zusammenfassung**

Die Erfindung betrifft einen Durchflußmesser nach dem Prinzip der Mediumsoszillation, mit einem vom zu messenden Medium durchsetzten Gehäuse, einer Einrichtung zur Erzeugung der Mediumsoszillation und einem Fühler zum Erfassen der Mediumsoszillation. Um bei einfachem Aufbau eine hochpräzise Durchflußmessung zu gewährleisten, ist es erfindungsgemäß vorgesehen, daß der Detektor einen Balken umfaßt, der die Wandung des Gehäuses durchsetzt und an diesem so eingespannt ist, daß eine Schwingungserregung seines in das Medium hineinstehenden Endes auf sein außerhalb des Gehäuses liegendes Ende übertragen wird, daß die Masse des Balkens so verteilt ist, daß am Ort seiner Einspannung kein Drehmoment bezüglich translatorischer Bewegung auftritt und daß ein Fühler zur Erfassung der Schwingungen vorgesehen ist, die das außerhalb des Mediums angeordnete Ende des Balkens ausführt.

## Beschreibung

Die Erfindung betrifft einen Durchflußmesser nach dem Prinzip der Mediumsoszillation, mit einem vom zu messenden Medium durchsetzten Gehäuse, einer Einrichtung zur Erzeugung der Mediumsoszillation und einem Detektor zum Erfassen der Mediumsoszillation.

Derartige Durchflußmesser sind so aufgebaut, daß die Frequenz der Mediumsoszillation proportional zum Durchfluß des Mediums ist. Bekannte Typen dieses Durchflußmessers sind der Wirbelzähler (Vortex-Meter), der Drallzähler (Swirlmeter) und der Schwingstrahlzähler (Jet-Stream-Meter).

Problematisch bei dem in Rede stehenden Durchflußmesser ist die Detektion der Oszillationsfrequenz. Problematisch ist diese Detektion deshalb, weil durch den Vorgang der Oszillationsfrequenzerfassung die Oszillation selbst zumindest nicht nennenswert gestört werden darf. Außerdem muß ein geeigneter Detektor auch sehr kleine Kräfte oder Drücke zuverlässig registrieren. Weiterhin muß der Detektor so ausgelegt sein, daß der zwischen der zu erfassenden Oszillation und externen periodischen Kräften, wie Vibrationen, zu unterscheiden vermag. Ein weiteres Problem besteht darin, daß der Detektor, falls er ins Medium ragt, dicht aus dem das Medium umschließende Gehäuse herausgeführt werden muß. Schließlich muß der Detektor widerstandsfähig gegen physikalische Belastungen, wie Druck, Druckstöße und Temperatur sowie gegen chemische Belastungen durch das jeweils verwendete Medium sein.

Es ist versucht worden, diese Probleme durch Anwendung unterschiedlicher Detektionsprinzipien in den Griff zu bekommen. So ist es beispielsweise bekannt, beim Wirbelzähler Piezokristalle zur Detektion einzusetzen. Dabei wird der Piezokristall an die Masse des Wirbelzähler-Störkörpers angekoppelt. Dies hat zur Folge, daß die Detektion empfindlich auf externe Vibrationen ist. Zur Minderung dieses Nachteils wird ein zweiter Detektor an einem anderen Ort eingesetzt, der ebenfalls aus einem Piezokristall besteht, wobei der Ort für den zweiten Detektor so ausgewählt ist, daß er auf die Mediumsoszillation schwächer reagiert als der erste Detektor. Diese Doppeldetektoranordnung erlaubt es, die externen Vibrationen zumindest in einem gewissen Maße durch elektronische Subtraktion zu eliminieren. Eine derartige Detektoranordnung ist jedoch wegen der Verwendung von zwei Detektoren und einer zusätzlichen Verarbeitungselektronik relativ teuer.

Ein weiteres bekanntes Detektionsprinzip beruht auf Thermistoren. Die Oszillationsdetektion erfolgt dabei so, daß die beheizten Thermistoren durch das oszillierende Medium periodisch abgekühlt werden, wobei dieser Wärmeverlust ein Maß für die Oszillation darstellt. Nachteilig hierbei ist, daß die Thermistoren in direktem Kontakt zum Medium gehalten werden müssen. Nachteilig ist dies deshalb, weil Thermistorwiderstände durch eine dünne Glasschicht geschützt sind, die von aggressiven Medien angegriffen wird, weshalb sich Thermistoren für solche Medien, aber auch für extreme Temperaturen weniger eignen.

Bekannt ist es weiterhin, für die Detektion der Mediumsoszillation einen Differenzdruckmesser einzusetzen. Das Detektionsprinzip ist hierbei die Erfassung von Druckschwankungen, die mit der Mediumsoszillation verbunden sind. Die hierfür verwendeten Differenzdruckmesser haben aus herstellungstechnischen Gründen ein sehr geringes Eigengewicht und sind deshalb relativ unempfindlich auf äußere Vibrationen. Empfindlich reagieren Differenzdruckmesser hingegen auf die Temperatur. Asymmetrische Druckstöße können diese Detektoren leicht zerstören, deren Schutz vor aggressiven Medien ein weiteres Problem darstellt.

Bekannt ist es schließlich, zur Detektion der Mediumsoszillation eine berührungslose Abstandsmessung vorzusehen. Ein entsprechender Detektor sieht eine einseitig eingespannte Hülse vor, die in das zu messende Medium hineinragt und von den Druckschwankungen der Mediumsoszillation periodisch ausgelenkt wird. Eine innere Hülse, die den Abstandsdetektor trägt, detektiert dabei die periodischen Auslenkungen der äußeren Hülse. Die Massen und Steifigkeiten der beiden ineinandergesetzten Hülsen sind so aufeinander abgestimmt, daß sie auf externe Vibrationen mit den selben Auslenkungen reagieren, weshalb externe Vibrationen für diesen Detektor kein Problem darstellen. Dieses Detektionsprinzip erfordert jedoch für die äußere Hülse einen sehr kleinen Durchmesser und eine geringe Wandstärke, damit Auslenkungen der Hülse überhaupt in detektierbarem Maße erfolgen. Dies hat zur Folge, daß die Fertigung der inneren Hülse äußerst aufwendig ist, da auf kleinstem Raum ein Abstandssensor untergebracht werden muß, der nachteiligerweise zudem mit den Mediumstemperaturen beaufschlagt wird.

Der Erfindung liegt die Aufgabe zugrunde, einen Durchflußmesser nach dem Prinzip der Mediumsoszillation zu schaffen, der widerstandsfähig gegen physikalische und chemische Belastungen ist und bei einfachem Aufbau im wesentlichen unbeschadet von externen Vibrationen eine präzise Durchflußmessung gewährleistet.

Gelöst wird diese Aufgabe durch die kennzeichnenden Merkmale des Anspruchs 1. Vorteilhafte Weiterbildungen der Erfindung sind in den Unteransprüchen angegeben.

Erfindungsgemäß ist es also vorgesehen, die Mediumsoszillation mit Hilfe eines schwingfähigen Balkens abzutasten, der in das oszillierende Medium hineinragt, und der in der Wandung des Durchflußmessergehäuses derart gelagert ist, daß von der Mediumsoszillation erzeugte Balkenschwingungen auf das ausserhalb des Gehäuses gelegene Balkenende übertragen werden, wo sie unbeschadet von chemischen und physikalischen Einflüssen des Mediums durch einen Fühler abgegriffen werden können. Mit anderen Worten dient der erfindungsgemäß vorgesehene Balken im Detektor als Schwingungsübertrager zu einem extern angeordneten Fühler, der dadurch entkoppelt ist von chemischen Einwirkungen des Mediums, aber auch von physikalischen Einwirkungen des Mediums, wie insbesondere von Temperatureinflüssen, zumindest dann, wenn er nicht in leitender Verbindung mit dem Balken steht. Besonders geeignet ist deshalb als Fühler ein Abstandssensor. Ein weiterer Vorteil besteht darin, daß der Schwingungsübertragungsbalken einfach gefertigt werden kann, wobei problemlos auf ein Material für den Balken zurückgegriffen werden kann, das chemisch restistent gegen das Medium ist. In Betracht kommt als Material für den Balken Metall, Keramik oder Kunststoff. Dasselbe Material ist auch geeignet für die Lagerung des Balkens im Gehäuse.

Die Einspannung oder Lagerung des Balkens am Gehäuse erfolgt vorteilhafterweise über eine Dichtung oder durch eine feste Verbindung mit dem Gehäuse. Wesentlich ist dabei, daß die Einspannung oder die Lagerung des Balkens am Gehäuse eine wesentlich geringere Steifigkeit als der Balken selbst aufweist, so daß die nicht ins Medium ragende Seite des Balkens gegenläufige Bewegungen zu der ins Medium ragenden Seite des Balkens auszuführen vermag.

Wesentlich für die Erfindung ist es weiterhin, daß beide Seiten des Balkens bezüglich ihrer Masse und/oder Länge so abgestimmt sind, daß die Drehmomente beider Seiten an der Balkeneinspannung dem Wert Null ergeben. Aufgrund einer derartigen Einspannung des Balkens ist dieser weitgehend unempfindlich auf Translationsschwingungen.

Durch die erfindungsgemäß vorgesehene Verlagerung der eigentlichen Oszillationsmessung aus dem Durchflußmessergehäuse heraus ist zudem genügend Platz für einen Fühler, beispielsweise einen Abstandsdetektor, vorhanden, der aus diesem Grunde zudem wesentlich einfacher angeordnet werden kann als bei dem bekannten, auf einer Abstandsmessung basierenden Detektor. Außerdem ist der außerhalb des Gehäuses angeordnete Fühler des Detektors jederzeit leicht zugänglich und kann insbesondere leicht ausgewechselt werden, ohne daß der Durchflußmesser aus der Rohrleitung ausgebaut werden muß.

Nachfolgend soll die Erfindung anhand der schematischen Zeichnung beispielshaft näher erläutert werden.

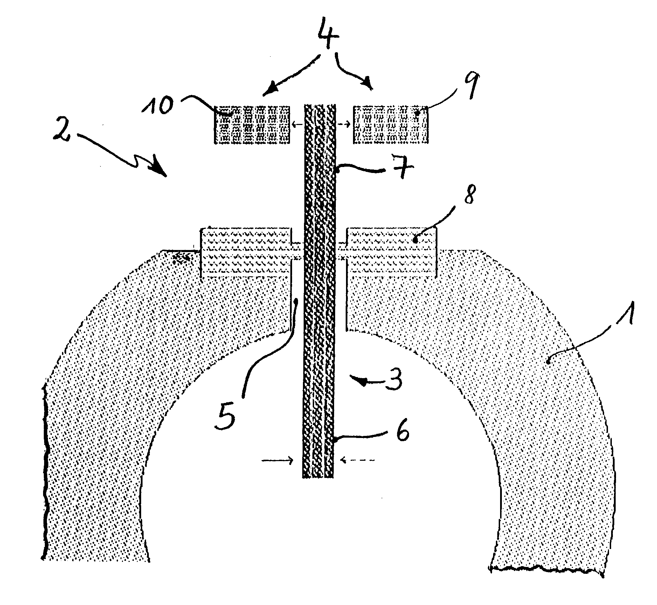

Die einzige Figur der Zeichnung zeigt in schematischer Darstellung einen Schnitt durch das Gehäuse eines erfindungsgemäßen Durchflußmessers im Bereich des Detektors.

Der in der Figur dargestellte Durchflußmesser umfaßt ein ringförmiges Gehäuse 1, das beispielsweise in eine Rohrleitung eingesetzt ist, um den Durchfluß eines durch die Rohrleitung strömenden Mediums zu messen, das den Innenraum des Gehäuses 1 durchsetzt. Der Detektor 2 des Durchflußmessers weist einen Balken 3 und einen Fühler 4 auf, der außerhalb des Gehäuses 1 angeordnet ist. Der Balken 3 durchsetzt berührungslos eine Ausnehmung 5 in der Wandung des Gehäuses 1 und erstreckt sich beidseits der Ausnehmung 5. Der Balken 3 ragt deshalb mit einem Abschnitt 6 in den Innenraum des Gehäuses hinein sowie mit einem Abschnitt 7 aus dem Gehäuse 1 heraus. Insgesamt verläuft der Balken 3 in etwa radial mit Bezug auf das ringförmige Gehäuse 1 und ist am Gehäuse 1 gelagert bzw. am Gehäuse 1 mittels einer Lagereinrichtung 8 eingespannt.

Das Lager 8 ist dort, wo es mit dem Gehäuse 1 verbunden ist, stärker ausgebildet als im zentralen Bereich, der den Balken 6 trägt. Das Lager 8 ist mit dem Gehäuse 1 fest verbunden, beispielsweise durch Verschraubung oder durch Verschweissung, je nach dem, aus welchem Material das Lager 8 besteht. Wesentlich bei der Materialauswahl für das Lager 8 ist es, daß das Lager 8 im den Balken 3 tragenden zentralen Bereich weicher oder weniger steif ausgelegt ist als der Balken selbst. Dadurch wird erreicht, daß das in Oszillation versetzte Medium, welches den Innenraum des Gehäuses 1 durchsetzt, nicht nur den in das Medium hineinragenden Endabschnitt 6 des Balkens 3 in Schwingung zu versetzen vermag, sondern daß diese Schwingungen auch über die Einspannstelle 8 hinaus zum anderen Ende 7 des Balkens übertragen werden, wo die im wesentlichen quer zum Balken 6 verlaufenden Schwingungen (siehe Pfeile) vom Fühler 4 abgetastet werden, der aufgrund seiner externen Lage von direkten Einflüssen durch das Medium, wie die Temperatur des Mediums und die chemischen Eigenschaften des Mediums, abgekoppelt ist.

Im dargestellten Ausführungsbeispiel ist ein Fühler 4 verwendet, der aus zwei Abstandssensoren 9 und 10 besteht, die über eine nicht dargestellte Halterung fest mit dem Gehäuse 1 verbunden sind. Es wird deshalb eine Tandemanordnung aus zwei Abstandssensoren 9 und 10 gewählt, weil auf diese Weise bei geeigneter Zusammenschaltung der Sensorausgangssignale externe Störungen, insbesondere Vibrationen, kompensiert werden können, so daß als Nutzsignal im wesentlichen die reine Schwingung des Balkens 6 zur weiteren Auswertung zur Verfügung steht.

Wesentlich bei dem dargestellten Durchflußmesser-Detektor ist es, daß die Drehmomente beider Balkenseiten 6 und 7 (beidseits des Lagers 8) gleich groß, jedoch entgegengesetzt sind, so daß am Ort der Einspannung des Balkens 3 im Lager 8 kein Drehmoment angreift. Erreicht werden kann dies beispielsweise dadurch, daß bei der dargestellten Ausführungsform des Balkens mit zwei unterschiedlich langen Seiten 6 und 7 der der Seite 6 entsprechende Teil des Balkens hohl ist. Alternativ hierzu kann eine Drehmomentgleichheit der Balkenseiten 6 und 7 dadurch erzielt werden, daß eine unterschiedliche äußere Form wie z.B. Länge, Breite, Querschnitt oder ein unterschiedliches Material für die beiden Balkenseiten gewählt wird.

## Patentansprüche

1. Durchflußmesser nach dem Prinzip der Mediumsoszillation, mit einem vom zu messenden Medium durchsetzten Gehäuse, einer Einrichtung zur Erzeugung der Mediumsoszillation und einem Detektor zum Erfassen der Mediumsoszillation,
dadurch **gekennzeichnet,**
daß der Detektor einen Balken (3) umfaßt, der die Wandung des Gehäuses (1) durchsetzt und an diesem so eingespannt ist, daß eine Schwingungserregung seines in das Medium hineinstehenden Endes (6) auf sein ausserhalb des Gehäuses (1) liegendes Ende (7) übertragen wird,
daß die Masse des Balkens (3) so verteilt ist, daß am Ort seiner Einspannung im wesentlichen kein Drehmoment auftritt und daß ein Fühler (4) zur Erfassung der Schwingungen vorgesehen ist, die das außerhalb des Mediums angeordnete Ende (7) des Balkens (3) ausführt.

2. Durchflußmesser nach Anspruch 1,
dadurch **gekennzeichnet,**
daß die Seite (6) des Balkens (3), die in das Medium ragt, mit zwei gegenüberliegenden Flächen versehen ist, die nahezu parallel zur Gesamtströmungsrichtung stehen und den oszillierenden Druck des Mediums aufnehmen.

3. Durchflußmesser nach Anspruch 1 oder 2,
dadurch **gekennzeichnet,**
daß die Seite (7) des Balkens (3), die nicht in das Medium ragt, mit zwei gegenüberliegenden Flächen versehen ist, die nahezu parallel zur Gesamtströmungsrichtung stehen.

4. Durchflußmesser nach einem der Ansprüche 1 bis 3,
dadurch **gekennzeichnet,**
daß der Fühler (4) einen Abstandssensor aufweist, der den Abstand einer der Balkenflächen in Richtung der Flächennormalen, in Bezug auf einen gehäusefesten Bezugspunkt mißt.

5. Durchflußmesser nach einem der Ansprüche 1 bis 3,
dadurch **gekennzeichnet,**
daß der Fühler (4) zwei Abstandssensoren (9,10) aufweist, die in Richtung der Flächennormalen zweier, einander gegenüberliegender Balkenflächen den Abstand zu einem gehäusefesten Bezugspunkt messen und deren Ausgangssignale miteinander so kombiniert werden, daß auf beide Abstandssensoren (9,10) gleichzeitig einwirkende Störungen im wesentlichen kompensiert sind.

6. Durchflußmesser nach Anspruch 4 oder 5,
dadurch **gekennzeichnet,**
daß als gehäusefester Bezugspunkt der fest mit dem Gehäuse verbundene Träger des Abstandssensors bzw. der Abstandssensoren (9,10) dient.

7. Durchflußmesser nach einem der Ansprüche 4 bis 6,
dadurch **gekennzeichnet,**
daß der Abstandssensor, bzw. die Abstandssensoren (9,10) nach einem optischen, kapazitiven oder induktiven Prinzip realisiert ist bzw. sind.

8. Durchflußmesser nach einem der Ansprüche 1 bis 7,
dadurch **gekennzeichnet,**
daß die Masseverteilung des Balkens (3) zugunsten eines Drehmoments vom Wert Null an der Balkeneinspannung (8) durch ungleiche Längen, Breiten oder Querschnitte des Balkens beiderseits seiner Einspannung und/oder dadurch realisiert ist, daß eine Balkenseite hohl ausgebildet ist, und/oder dadurch, daß für beide Balkenseiten ein unterschiedliches Material vorgesehen ist.

9. Durchflußmesser nach einem der Ansprüche 1 bis 8,
**gekennzeichnet** durch
eine Einspannung (8) des Balkens (3) über eine Dichtung.

10. Durchflußmesser nach einem der Ansprüche 1 bis 9,
dadurch **gekennzeichnet**,
daß die Einspannung (8) mit dem Balken (3) fest, vorallem dichtungslos, verbunden ist.
